(19) Europäisches Patentamt
European Patent Office
Office européen des brevets

(11) **EP 2 650 793 A1**

(12) **EUROPEAN PATENT APPLICATION**
published in accordance with Art. 153(4) EPC

(43) Date of publication:
**16.10.2013 Bulletin 2013/42**

(51) Int Cl.:
*G06F 12/00* (2006.01)   *G06F 9/50* (2006.01)
*G06Q 50/10* (2012.01)

(21) Application number: **12818771.3**

(22) Date of filing: **16.08.2012**

(86) International application number:
**PCT/JP2012/070837**

(87) International publication number:
**WO 2013/027649 (28.02.2013 Gazette 2013/09)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.08.2011   JP 2011179342**

(71) Applicant: Otsuka Corporation
**Tokyo 102-8573 (JP)**

(72) Inventor: **KAKIZAKI, Atsushi**
**Tokyo 102-8573 (JP)**

(74) Representative: **Betten & Resch**
**Theatinerstrasse 8**
**80333 München (DE)**

(54) **VIRTUAL DATA CENTER SYSTEM**

(57)   An objective of the present invention is to provide a virtual data center system. The virtual data center system comprises: a plurality of data center systems; a provisioning system whereby information can be sent to and received from the data center systems; and an operational statistics database for storing information relating to resources of the data center systems, wherein: using the information relating to the resources stored in the operational statistics database, the provisioning system compares: resource costs based on the resources of a desired generation of data center system, in accordance with usage circumstances of the data center systems from a user system used by a user; and resource costs based on resources of a generation of data center system currently being used by the user, and thereby calculates the resource costs that would be reduced in the event of migration to the desired generation of data center system; and the data center systems currently used by the user being re-arranged to the desired generation of data center system in response to a control command issued from the user system.

FIG. 1

EP 2 650 793 A1

**Description**

TECHNICAL FIELD

The present invention relates to a virtual data center system.

BACKGROUND ART

Computers have been introduced into many businesses and are used on a daily basis. However, many businesses, especially small to medium enterprises, have budgetary constraints in regard to computer systems, and due to the need for systems to be built, managed, and the like within such constraints, [the systems] have been built using specifications with a certain degree of compromise.

This has given rise to: business continuity planning (BCP) problems, whereby system redundancy and disaster contingencies cannot progress; compliance problems, whereby security management cannot progress; IT cost problems, whereby cost reductions with respect to resources cannot progress; and the like.

It is difficult to address BCP problems, with the need for dedicated equipment, design, building, and the costs thereof, such as the usage of a cluster and/or load balancer for enhancing usability as well as the saving of data to a remote site for disaster contingency and the building of a back-up system at a remote site using an exclusive line.

As regards compliance problems, there are more opportunities to use not only in-house systems, but also infrastructure as a service (IaaS) and software as a service (SaaS), as well as remote access; and there arises a need for centralized ID management as well as management of access permissions for every resource. However, there are also the considerable problems not only in terms of the costs of system building but also security management without the securement of personnel for operation, and yet these problems are less likely to be prioritized.

As regards IT costs problems, having a computer system that has already been introduced makes it difficult to benefit from the equipment and services that become less expensive with each passing year, and although power saving is a societal responsibility of corporate organizations, the optimization of power consumption by computer systems is a problem that is not readily addressed.

In view whereof, a method of resolution emerges by using a data center in small to medium enterprises as well, as is illustrated in, for example, Patent Document 1 and/or Patent Document 2 below.

Prior Art Documents

Patent Documents

Patent Document 1 : Japanese Laid-open Patent Application No. 2007-94604
Patent Document 2: Japanese Laid-open Patent Application No. 2000-156692

DISCLOSURE OF THE INVENTION

PROBLEMS TO BE SOLVED BY THE INVENTION

The use of a data center makes it possible to resolve BCP problems and compliance problems to a certain extent. However, altering a data center system at a later date, once the data center system has been introduced, necessitates a certain amount of knowledge. That is, expert knowledge is necessary in order to ascertain the extent to which costs will be reduced when a data center is given a certain system configuration, and in many cases small to medium enterprises are unable to address this. A data center system will therefore be continually used without alteration once the data center system has been introduced, and as a result, a problem emerges in that costs with respect to resources will not be reduced.

MEANS USED TO SOLVE THE ABOVE-MENTIONED PROBLEMS

The present inventors, in view of the above-described problems, have invented the virtual data center system of the present invention.

A first aspect of the present invention is a virtual data center system comprising: a plurality of data center systems; a provisioning system whereby information can be sent to and received from the data center systems; and an operational statistics database for storing information relating to resources of the data center systems, wherein: using the information relating to the resources stored in the operational statistics database, the provisioning system compares: resource costs based on the resources of a desired generation of data center system, in accordance with usage circumstances of the data center systems from a user system used by a user; and resource costs based on resources of a generation of data center system currently being used by the user, and thereby calculates the resource costs that would be reduced in the event of migration to the desired generation of data center system; and the data center systems currently used by the user being re-arranged to the desired generation of data center system in response to a control command issued from the user system.

Adopting a configuration as practiced in the present invention makes it possible to reduce the burden of IT costs and to resolve the above-described IT cost problems, even though the user may not have any particularly expert knowledge.

In the invention described above, a configuration as a virtual data center system can be adopted in which the virtual data center system further comprises a user information database for storing information on the system configuration of the user system used by the user, and in which the provisioning system extracts the information on the system configuration of the user system by checking the user information database; and, using the extracted information on the system configuration, selects as a primary site the data center system having an optimal round-trip time from among the data center systems in the virtual data center system, and selects as a secondary site the data center system having the second smallest round-trip time.

Preferably, from the standpoint of access speed and the like, the primary site and the secondary site, which have a high likelihood to be used on a daily basis, are in close proximity to the user system. In view whereof, the configuration as in the present invention makes it possible to automatically select the primary site and the secondary site.

In the invention described above, a configuration as a virtual data center system can be adopted in which, using the extracted information on the system configuration, the provisioning system further selects as a back-up site the data center system having the greatest value for the round-trip time, from among the data center systems in the virtual data center system.

Preferably, the back-up site is present at a location far apart from the user system. In view whereof, the configuration as in the present invention makes it possible to automatically select the back-up site.

In the invention described above, a configuration as a virtual data center system can be adopted in which the provisioning system further requests that resources be allocated to the data center systems selected to serve as the primary site and the secondary site, and causes [the resources] to be in an available state.

The present invention makes it possible to use the primary site and the secondary site.

In the present invention described above, a configuration as a virtual data center system can be adopted in which the provisioning system further requests that resources be allocated to the data center system selected to serve as the primary site from among the selected primary site and the secondary site, and thereby makes the resources available, and requests that resources be allocated when a predetermined condition is fulfilled, but not that resources be allocated to the data center system serving as the secondary site.

In a case where the secondary site is primarily used for the purpose of fail-over, a wasteful use of resources in the data center system selected to serve as the secondary site takes place when resources are allocated thereto at all times. In view whereof, the secondary site may be made available in accordance with need, and the present invention makes it possible to implement this configuration.

EFFECT OF THE INVENTION

The use of the virtual data center system of the present invention makes it possible for a business, which is the user, to reduce the costs of IT resources, such as central processing units (CPUs), discs, memory, and the like, without re-building or re-investing in a computer system. It is also possible to enhance usability, plan for disaster contingencies, and strengthen security, as is necessary, without re-building the system.

In particular, with the virtual data center system of the present invention, the user system can be arranged in a manner optimized for usability and cost by utilizing the unique analysis results obtained from the log analysis of an integrated monitoring system for monitoring a virtual data center that includes the user system in the user's office as well as geographically dispersed small-scale data centers connected into a network and pooled into a shared resource.

DESCRIPTION OF THE DRAWINGS

FIG. 1 is a drawing schematically illustrating a summary of the virtual data center system of the present invention;
FIG. 2 is a drawing schematically illustrating one example of a hardware configuration for a computer used in each of the systems constituting the virtual data center system of the present invention;

FIG. 3 is a drawing schematically illustrating one example of a processing process of the virtual data center system of the present invention;

FIG. 4 is a drawing schematically illustrating a case where a primary site has experienced a failure;

FIG. 5 is a drawing schematically illustrating a case where a load balancer is used;

FIG. 6 is a drawing schematically illustrating a case where a local server is used and the local server has experienced a failure; and

FIG. 7 is a drawing schematically illustrating one example of a calculation of resource costs.

BEST MODE FOR CURRYING OUT THE INTENTION

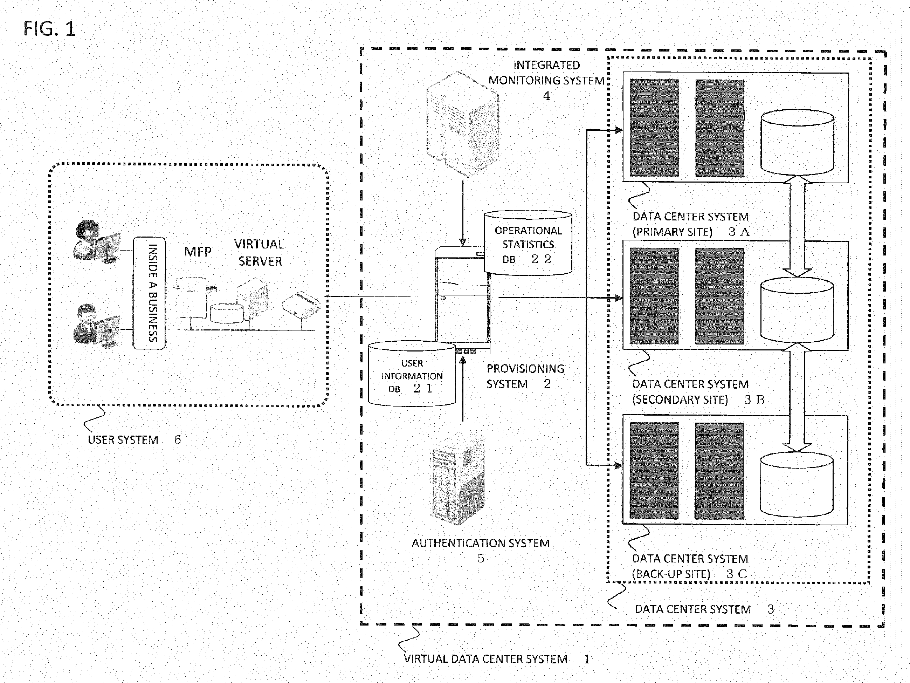

A summary of a virtual data center system 1 of the present invention is schematically illustrated in FIG. 1. The virtual data center system 1 of the present invention comprises a provisioning system 2, data center systems 3, an integrated monitoring system 4, and an authentication system 5; information can be sent to and received from a user system 6 used by users (a business or the like).

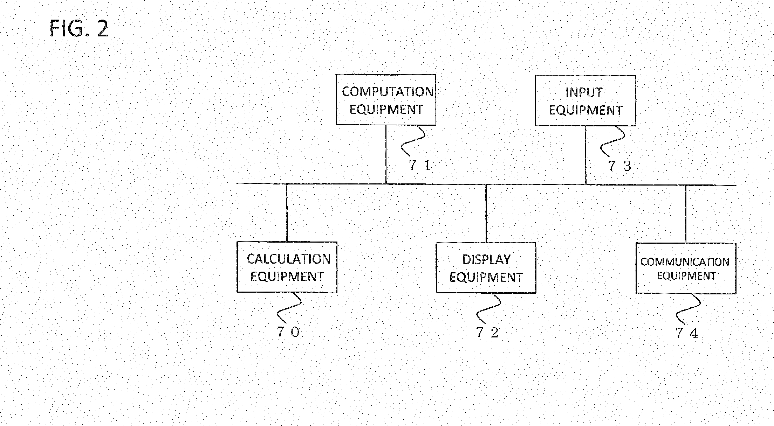

Each of the computer systems in the virtual data center system 1 is constituted of at least one computer (including servers). The computer has: a CPU or other computation equipment for executing a computation process of a program; a random access memory (RAM), hard disc, or other storage equipment for storing information; a display (screen) or other display equipment; a keyboard, pointing device (a mouse, keypad, or the like), or other input equipment; and communication equipment for sending and receiving a processing result from the computation equipment or the information stored in the storage equipment, via the Internet, a local area network (LAN), or other network. Means (a program, module, or the like) for executing the processing relating to each of the functions (each of the means) to be implemented on the computer are read by the computation equipment, and associated processing is thereby executed. In a case where the information stored in the storage equipment is to be used in the processing for a respective function, the relevant information is read out from the relevant storage equipment and the information thus read is used, as appropriate, for the processing in the computation equipment. One example of a hardware configuration for a computer used in each of the systems is schematically illustrated in FIG. 2. The functions of each of the systems may also be arranged in a spread-out fashion in a plurality of computer terminals or servers.

The functions of each of the means in the present invention may merely be theoretically partitioned, or may physically or effectively constitute the same domain.

The provisioning system 2 is a system for sending and receiving information to and from the user system 6; the data center system 3 that is to be directly accessed by a user ("primary site 3A") is determined automatically, and a network and system resources required by the user system 6 are allocated automatically. Also automatically determined are a data center system 3 serving as a fail-over destination for a case where the primary site 3A has experienced an abnormality ("secondary site 3B") and a data center system 3 to which data is to be backed up ("back-up site 3C").

In the provisioning system 2, a user information database 21 and an operational statistics database 22 are provided. In the user information database 21, contractual information relating to the user who is using the user system 6 is stored, as is information relating to system configuration management of the user system 6. In the operational statistics database 22, a variety of types of information relating to when the user used the virtual data center system 1 are stored. For example, CPU information (a peak utilization rate and operating clock for every core), memory information (a peak utilization amount), storage information (a utilization amount and peak input/output operations per second (IOPS) (an input/output (I/O) through-put per one second of storage)), and the like are stored as actual user resource usage data relating to the user. Additionally, access data is recorded, and contractual users, authentication accounts, access origins, usage start times, usage end times, communication data amounts, and the like are stored.

The data center systems 3 are systems provided with storage for storing the variety of types of information that are used in the user system 6, and are installed either in Japan or in a plurality of locations worldwide. Information can be exchanged between respective data center systems 3. A data center system 3 to serve as the primary site 3A, the secondary site 3B, and the back-up site 3C is set for every user, but what is a primary site 3A for one user is capable of serving as a back-up site 3C for a different user. Data is replicated between the primary site 3A and the secondary site 3B, and data is backed up between either the primary site 3A or the secondary site 3B and the back-up site 3C. For this reason, in a case where the primary site 3A experiences an abnormality, a control command issued from the provisioning system 2 causes there to be a switch from the primary site 3A to the secondary site 3B. Mirroring may also be carried out between the primary site 3A and the secondary site 3B.

The integrated monitoring system 4 analyzes and determines a site arrangement that will optimize resource costs for the user system 6, on the basis of the actual user resource usage data, access data, and the like recorded in the operational statistics database 22 within the provisioning system 2. The result of the determination is generated on an electronic medium or paper medium as a proposal for an optimized arrangement report.

The authentication system 5 executes authentication processing within the virtual data center system 1. In a case where an ID management system (not shown) for managing IDs is provided in the user system 6, achieving synchronicity with the ID management system allows the authentication management to be seamless. In the authentication system 5, it is possible not only to control and manage access to the virtual data center system 1 from the user system 6, but to control access permissions for every individual user to access resources in the user system 6. Even when not expressly stated in the description below, the authentication processing is carried out by the authentication system 5 whenever the user accesses the virtual data center system 1.

The user system 6 is a computer system used by the user, and is constituted of a variety of different computers and/or servers. Provided that connection to a network is possible, examples may include a printer or multifunction peripheral (MFP) equipment.

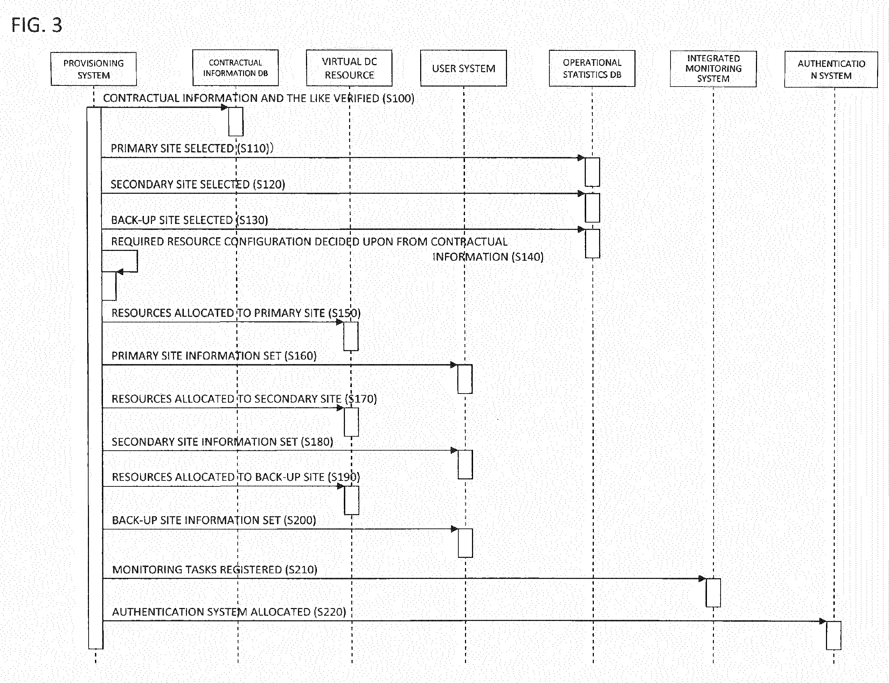

The description shall now relate to one example of a processing process for the case where the virtual data center system 1 of the present invention is used, with reference to the sequence diagram in FIG. 3. The contractual information on the user is stored in the user information database 21 in advance for every item of identification information.

Firstly, an initial setting for the optimal operation of the virtual data center system 1 is carried out from the user system 6.

The user requests the initial setting by carrying out a predetermined operation in the user system 6. Then, on the basis of the request, the provisioning system 2 checks the user information database 21 and thereby checks the contractual information of the relevant user (herein, the contractual information may also be checked on the basis of the identification information of the user) and extracts the configurations of the user system 6 (the software configuration, the hardware configuration, the network configuration, and the like), information on the base point where the user system 6 is present, and the like (S100).

Then, the provisioning system 2 selects, from among the plurality of data center systems 3, the data center system 3 to serve as the primary site 3A, on the basis of the information that was extracted in S100 (S110) . More specifically, the data center system 3 whereby the round- trip time will be optimal is calculated on the basis of the type of communication channel and of the information on the base location in the user system 6, and this data center system 3 is selected to serve as the primary site 3A.

In order for the processing in S110 to be carried out, basic information is first collected and recorded in advance in the following processing. The integrated monitoring system 4 periodically requests, from an agent system of user edge routers within the data center systems 3, the acquisition of the round-trip times for all edge routers belonging to respective data center systems 3; and records the results thus obtained in the operational statistics database 22. The integrated monitoring system 4 also periodically requests, from the agent system of the user edge routers, the acquisition of the round-trip times to the user routers arranged on the user system 6 side; and records the results thus obtained in the operational statistics database 22.

From the operational statistics database 22 in which the round-trip times have been recorded as described above, the provisioning system 2 acquires the round-trip times between the user edge routers and all of the edge routers belonging to each of the data center systems 3. Then, the data center system 3 having the smallest value among the acquired round-trip times to the edge routers of each of the data center systems 3 is selected to serve as the most proximal data center for the user, i.e., as the primary site 3A.

When the primary site 3A is selected, the provisioning system 2 subsequently selects the data center system 3 to serve as the secondary site 3B (S120). More specifically, the data center system 3 having the second smallest value among the round-trip times to the edge routers of each of the data center systems 3 as acquired in S110 is selected to serve as the data center system 3 of the secondary site 3B for the user. This manner of having the secondary site 3B be the data center system 3 having the second smallest value for the round-trip time makes it possible to select the secondary site 3B where the fail-over from the primary site 3A will be fastest.

When the secondary site 3B is selected, the provisioning system 2 subsequently selects the back-up site 3C (S130). More specifically, the data center system 3 having the greatest value among the round-trip times to the edge routers of each of the data center systems 3 as acquired in S110 is selected to serve as the data center system 3 of the back-up site 3C for the user. This manner of having the back-up site 3C be the data center system 3 having the greatest value for the round-trip time makes it possible to select a data center system 3 that is adequately far from (separated by an adequate distance from) the primary site 3A and the secondary site 3B, to serve as the back-up site 3C. This makes it possible for a data center system 3 present at a remote location from the data center systems 3 being operated by the user system 6 to then serve as the back-up site 3C, thus making it possible to cope with a widespread disaster.

When the primary site 3A, the secondary site 3B, and the back-up site 3C are selected in the above-described manner, the provisioning system 2 decides on a required resource configuration, on the basis of the information on the configuration of the user system 6 of the relevant user within the contractual information extracted in S100 (S140). The information on the primary site 3A, the secondary site 3B, and the back-up site 3C selected in S110 to S130 may also be stored in the user information database 21 in association with every user. Also, in the present embodiment, a fail-over between two data center systems 3, namely, between the primary site 3A and the secondary site 3B is possible, but it would also be possible for three or more data center systems 3 to be set so as to allow for a cascade fail-over. In such a case, a prioritization sequence is assigned to each of the data center systems 3; this prioritization sequence may, similarly with respect to the foregoing description, be assigned on the basis of the round-trip times to the edge routers of each of the data center systems 3, in increasing order.

Then, in accordance with the resource configuration as decided in S140, the provisioning system 2 requests that resources be allocated to the data center system 3 selected to serve as the primary site 3A; in the data center system 3 serving as the primary site 3A which has received [these resources], the resources are ensured to serve as resources for the relevant user (S150) . The provisioning system 2 also sends information on the primary site 3A to the user system 6 and thereby sets the information for the relevant user system 6 (S160) . That is, the information is set so as to enable access to the resources having been ensured in S150 whenever the provisioning system 2 in the virtual data center system 1 is accessed from the user system 6.

Similarly, a request is made for resources to also be allocated in the secondary site 3B and the back- up site 3C, and the resources are ensured to serve as the resources of the relevant user in the respective data center systems 3 serving as the secondary site 3B or the back- up site 3C which have received [these resources] (S160, S170, S180, S190) .

In the secondary site 3B and the back- up site 3C, only the resource configurations are decided upon and saved; in reality, resources are not allocated to the respective data center systems 3 serving as the secondary site 3B and the back-up site 3C, but rather a configuration can be adopted when the need arises (for example, when a fail-over takes place, when backing up is to be performed, or the like) so that the resources are allocated.

After the above-described processing has been executed, the provisioning system 2 registers, with respect to the integrated monitoring system 4, monitoring tasks for monitoring the primary site 3A, the secondary site 3B, and the back-up site 3C allocated to the relevant user (S200).

The provisioning system 2 also carries out allocations with respect to the authentication system 5 so as to function as the authentication system 5 of the relevant user (S210).

Executing the above-described processing makes it possible to carry out the initial setting in the virtual data center system 1.

The user uses the virtual data center system 1 from the user system 6 on the basis of the above-described initial setting. In this case, the user system 6 will access the data center system 3 serving as the primary site 3A. The circumstances of communication between the user system 6 and the data center system 3 serving as the primary site 3A, i.e., the authentication account, the IP address serving as the access origin, the usage start time, the usage end time, the communication data amount, and other information relating to the communication circumstances, are recorded in the operational statistics database 22 as access data.

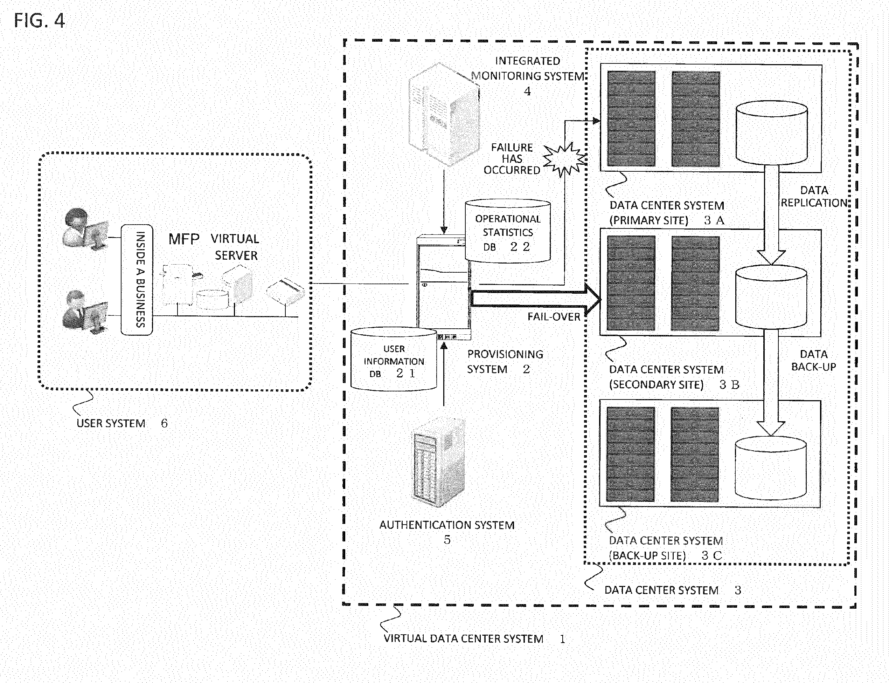

In a case where a primary site 3A is detected to have experienced an abnormality as a result of the monitoring by the monitoring tasks of the integrated monitoring system 4, the provisioning system 2 receives the result thereof from the monitoring task and checks the user information database 21; in a case where the user is using a data center system 3 detected to have an abnormality, as the primary site 3A, then the provisioning system 2 fails over to the secondary site 3B and restores the system. This is schematically illustrated in FIG. 4.

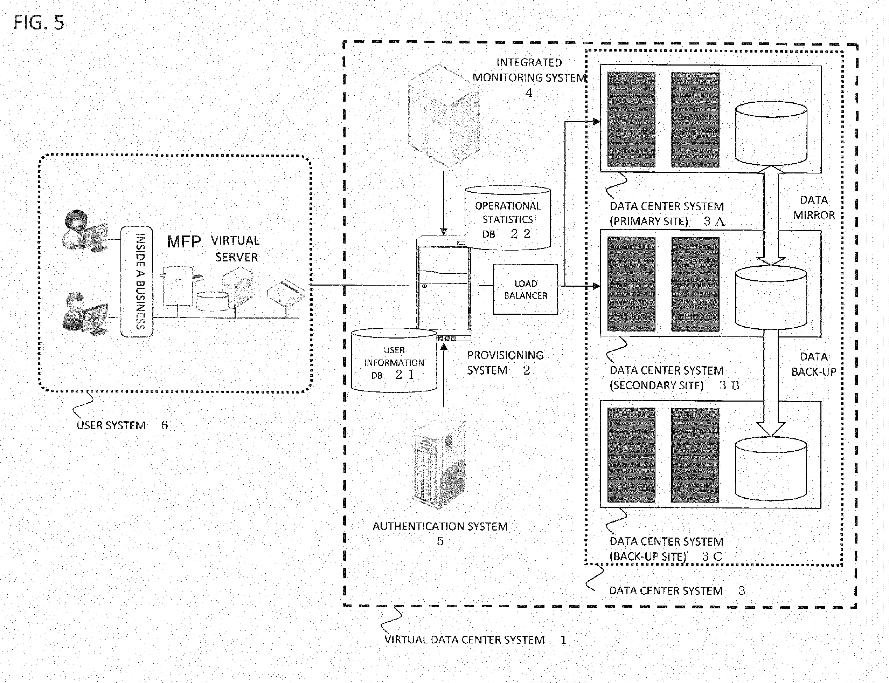

The case illustrated in FIG. 4 is a configuration in which the primary site 3A is used ordinarily and the secondary site 3B is used during an abnormality, but a load balancer may also be used to enable simultaneous usage while data is being mirrored in the primary site 3A and the secondary site 3B. In such a case, a function therefor may be provided within the provisioning system 2 as the load balancer, or may be provided as a separate computer. This is schematically illustrated in FIG. 5.

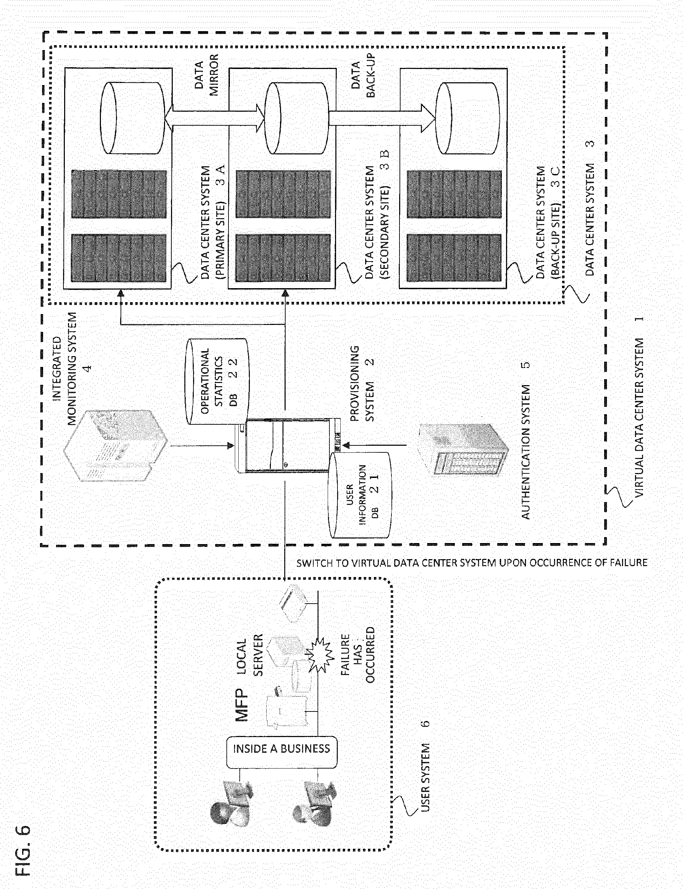

The configuration may also be such that the virtual data center system 1 is ordinarily not used, but rather a local server provided within the user system 6 is ordinarily used, and the data center system 3 in the virtual data center system 1 are used in a case where the local server experiences an abnormality. In such a case, the local server will function as the primary site 3A, and the data center systems 3 in the virtual data center system 1 will function as the secondary site 3B and the back-up site 3C. For this reason, data is periodically replicated between the local server and the data center system 3 serving as the secondary site 3B (processing as the primary site 3A in the data center system 3 is also acceptable). This is schematically illustrated in FIG. 6.

In the virtual data center system 1, because the results from the usage of the virtual data center system 1 by the user are recorded in the operational statistics database 22, the provisioning system 2 executes an analysis for the optimal system arrangement for minimizing resource costs, on the basis of the actual user resource usage data and access data recorded in the operational statistics database 22. This analysis may be carried out periodically, such as, for example, on a monthly basis, or may be carried out non-periodically, in accordance with a request from the user.

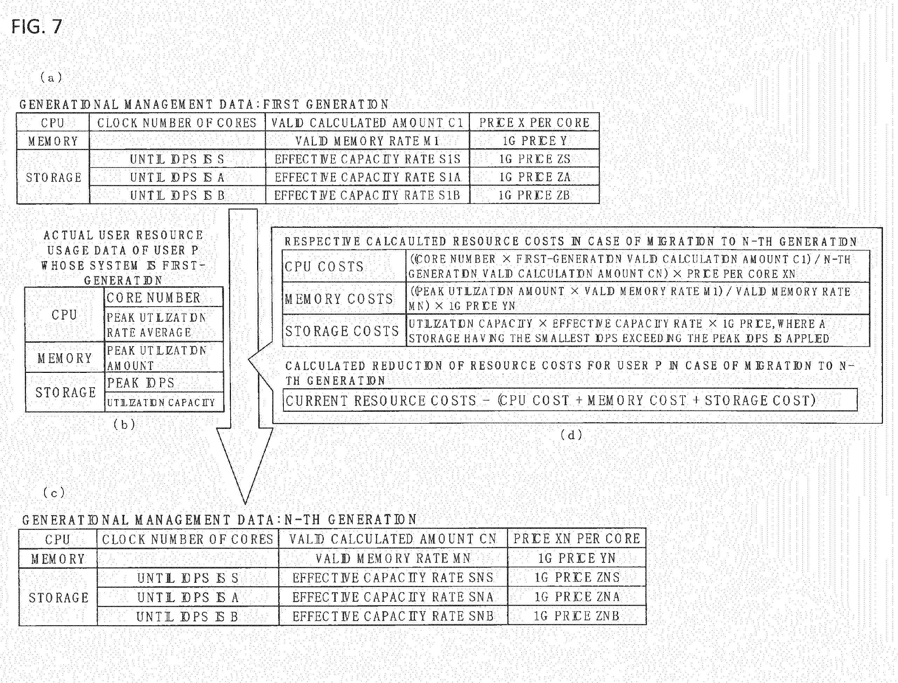

FIG. 7 schematically illustrates the analytical processing for the optimal system arrangement in the provisioning system 2. In FIG. 7, the "effective calculated amount" refers to a clock number calculated to be an effective calculated amount not dependent on the environment, according to the CPU-executed processing architecture and the overhead of the virtualized environment. The "effective memory rate" and "effective capacity rate" are calculated amounts that can be used by the user, excluding the over-head caused by virtualization and the like.

A first generation of CPU, memory, and storage is to be used by the user in the data center systems 3. A "generation" indicates a distinction in the hardware configurations in the data center systems 3; generally, an earlier generation will have older specifications, but no limitation is imposed thereby.

FIG. 7A illustrates the respective specification values for a first generation of CPU, memory, and storage. FIG. 7B illustrates real resource usage data on a user, stored in the operational statistics database 22, and FIG. 7C illustrates the respective specification values for the data center systems 3 of an N-th generation (higher specifications than in the first generation).

On the basis of the respective data in FIGS. 7A to 7C, the provisioning system 2 calculates, as per FIG. 7D, the respective resource costs for a case where a user using a data center system 3 of the first generation uses a data center system 3 of the N-th generation.

More specifically, the CPU costs for the case where a transition has been made to the N-th generation are calculated by:

```
((core number × first-generation valid calculation amount
C1) / N-th generation valid calculation amount CN) × price per
core XN.
```

The memory costs for the case where a migration is made to the N-th generation are calculated by:

```
((peak utilization amount × first-generation valid memory
rate M1) / N-th generation valid memory rate MN) × price per 1
gigabyte YN.
```

Additionally, the storage costs for the case where a migration is made to the N-th generation are calculated by:

```
utilization capacity × effective capacity rate × price
per gigabyte, where a storage having the smallest IOPS
exceeding the peak IOPS is applied.
```

The CPU costs, memory costs, and storage costs for the case where a migration is made to the N-th generation, as calculated in this manner, are used to subtract from the current resource costs (of the first generation of data center systems 3).

That is,

```
current resource costs - (N-th generation CPU costs + N-
th generation memory costs + N-th generation storage costs)
```

is calculated.

This value will be the resource cost as diminished in a case where the user has transitioned to the N-th generation of data center systems 3. That is, the resource costs of the user decrease by a monetary amount commensurate with this value.

By calculating in the manner described above, the provisioning system 2 is able to execute analytical processing for the optimal system arrangement for minimizing the costs with respect to the resources. That is, when the aforementioned value becomes positive, a determination can be made that migrating to the N-th generation of data center systems 3 is preferable.

This analysis result is then sent from the provisioning system 2 to the user system 6 and, upon authentication of the analysis result, the user issues a command to change (rearrange) from the first generation to the N-th generation of data center systems 3. That is, a request for re-arrangement is sent from the user system 6 to the virtual data center system 1.

Upon receipt of the request by the provisioning system 2 for the re-arrangement of the virtual data center system 1, the data center system 3 having the smallest value for the round-trip time from among the N-th generation of data center systems 3 is set to serve as the new primary site 3A, the data center system 3 having the second smallest value is set to serve as the new secondary site 3B, and the data center system 3 having the greatest value is set to serve as new the back-up site 3C.

The migration of data from the former primary site 3A to the new primary site 3A, from the former secondary site 3B to the new secondary site 3B, and from the former back-up site 3C to the new back-up site 3C, is executed at any desired timing.

This makes it possible for the user to use the virtual data center system 1 in a more inexpensive manner.

INDUSTRIAL APPLICABILITY

The use of the virtual data center system 1 of the present invention makes it possible for a business, which is the user, to reduce the costs of IT resources, such as CPUs, discs, memory, and the like, without re-building or reinvesting in a computer system. It is also possible to enhance usability, plan for disaster contingencies, and strengthen security, as is necessary, without re-building the system.

In particular, with the virtual data center system 1 of the present invention, the user system 6 can be arranged in a manner optimized for usability and cost by utilizing the unique analysis results obtained from the log analysis of an integrated monitoring system 4 for monitoring a virtual data center that includes the user system 6 in the user's office as well as geographically dispersed small-scale data centers connected into a network and pooled into a shared resource.

DESCRIPTION OF THE NUMERICAL SYMBOLS

1: Virtual data center system
2: Provisioning system
3: Data center system
4: Integrated monitoring system
5: Authentication system
6: User system
21: User information database
22: Operational statistics database

**Claims**

1. A virtual data center system comprising:

a plurality of data center systems;
a provisioning system whereby information can be sent to and received from the data center systems; and
an operational statistics database for storing information relating to resources of the data center systems,
the virtual data center system being **characterized in that**:

using the information relating to the resources stored in the operational statistics database, the provisioning system compares: resource costs based on the resources of a desired generation of data center system, in accordance with usage circumstances of the data center systems from a user system used by a user; and resource costs based on resources of a generation of data center system currently being used by the user, and thereby calculates the resource costs that would be reduced in the event of migration to the desired generation of data center system; and
the data center system currently used by the user being re-arranged to the desired generation of data center system in response to a control command issued from the user system.

2. The virtual data center system as set forth in claim 1, **characterized in that**:

the virtual data center system further comprises a user information database for storing information on a system configuration of the user system used by the user; and

the provisioning system extracts the information on the system configuration of the user system by checking the user information database, and

using the extracted information on the system configuration, selects as a primary site the data center system having an optimal round-trip time from among the data center systems in the virtual data center system, and selects as a secondary site the data center system having the second smallest round-trip time.

3. The virtual data center system as set forth in claim 2, **characterized in that**:

using the extracted information on the system configuration, the provisioning system further selects as a back-up site the data center system having the greatest value for the round-trip time, from among the data center systems in the virtual data center system.

4. The virtual data center system as set forth in claim 2 or claim 3, **characterized in that**:

the provisioning system further requests that resources be allocated to the data center systems selected to serve as the primary site and the secondary site, and causes [the resources] to be in an available state.

5. The virtual data center system as set forth in claim 2 or claim 3, **characterized in that**:

the provisioning system
further requests that resources be allocated to the data center system selected to serve as the primary site from among the primary site and the secondary site, and thereby makes the resources available, and requests that resources be allocated when a predetermined condition is fulfilled, but not that resources be allocated to the data center system serving as the secondary site.

FIG. 1

INTEGRATED
MONITORING SYSTEM
4

DATA CENTER SYSTEM
(PRIMARY SITE)    3 A

OPERATIONAL
STATISTICS
DB    2 2

INSIDE A BUSINESS

MFP    VIRTUAL
SERVER

DATA CENTER SYSTEM
(SECONDARY SITE)    3 B

USER
INFORMATION
DB    2 1

PROVISIONING
SYSTEM    2

USER SYSTEM    6

AUTHENTICATION SYSTEM
5

DATA CENTER SYSTEM
(BACK-UP SITE)    3 C

DATA CENTER SYSTEM    3

VIRTUAL DATA CENTER SYSTEM    1

EP 2 650 793 A1

FIG. 2

FIG. 3

PROVISIONING SYSTEM | CONTRACTUAL INFORMATION DB | VIRTUAL DC RESOURCE | USER SYSTEM | OPERATIONAL STATISTICS DB | INTEGRATED MONITORING SYSTEM | AUTHENTICATION SYSTEM

CONTRACTUAL INFORMATION AND THE LIKE VERIFIED (S100)

PRIMARY SITE SELECTED (S110))

SECONDARY SITE SELECTED (S120)

BACK-UP SITE SELECTED (S130)

REQUIRED RESOURCE CONFIGURATION DECIDED UPON FROM CONTRACTUAL INFORMATION (S140)

RESOURCES ALLOCATED TO PRIMARY SITE (S150)

PRIMARY SITE INFORMATION SET (S160)

RESOURCES ALLOCATED TO SECONDARY SITE (S170)

SECONDARY SITE INFORMATION SET (S180)

RESOURCES ALLOCATED TO BACK-UP SITE (S190)

BACK-UP SITE INFORMATION SET (S200)

MONITORING TASKS REGISTERED (S210)

AUTHENTICATION SYSTEM ALLOCATED (S220)

EP 2 650 793 A1

FIG. 4

INTEGRATED
MONITORING SYSTEM
4

FAILURE
HAS
OCCURRED

DATA CENTER SYSTEM
(PRIMARY SITE)   3 A

DATA
REPLICATION

INSIDE A BUSINESS

MFP   VIRTUAL
SERVER

OPERATIONAL
STATISTICS
DB   2 2

FAIL-OVER

DATA CENTER SYSTEM
(SECONDARY SITE)   3 B

DATA
BACK-UP

USER
INFORMATION
DB   2 1

PROVISIONING
SYSTEM   2

USER SYSTEM   6

AUTHENTICATION SYSTEM
5

DATA CENTER SYSTEM
(BACK-UP SITE)   3 C

DATA CENTER SYSTEM   3

VIRTUAL DATA CENTER SYSTEM   1

EP 2 650 793 A1

13

FIG. 5

INTEGRATED
MONITORING SYSTEM
4

DATA CENTER SYSTEM
(PRIMARY SITE)   3 A

DATA
MIRROR

OPERATIONAL
STATISTICS
DB   2 2

LOAD
BALANCER

DATA CENTER SYSTEM
(SECONDARY SITE)   3 B

DATA
BACK-UP

MFP  VIRTUAL
SERVER

INSIDE A BUSINESS

USER
INFORMATION
DB   2 1

PROVISIONING
SYSTEM   2

USER SYSTEM   6

AUTHENTICATION SYSTEM
5

DATA CENTER SYSTEM
(BACK-UP SITE)   3 C

DATA CENTER SYSTEM   3

VIRTUAL DATA CENTER SYSTEM   1

EP 2 650 793 A1

14

FIG. 6

# FIG. 7

(a)

GENERATIONAL MANAGEMENT DATA:FIRST GENERATION

| CPU | CLOCK NUMBER OF CORES | VALID CALCULATED AMOUNT C1 | PRICE X PER CORE |
|---|---|---|---|
| MEMORY | | VALID MEMORY RATE M1 | 1G PRICE Y |
| STORAGE | UNTIL IOPS IS S | EFFECTIVE CAPACITY RATE S1S | 1G PRICE ZS |
| | UNTIL IOPS IS A | EFFECTIVE CAPACITY RATE S1A | 1G PRICE ZA |
| | UNTIL IOPS IS B | EFFECTIVE CAPACITY RATE S1B | 1G PRICE ZB |

ACTUAL USER RESOURCE USAGE DATA OF USER P WHOSE SYSTEM IS FIRST-GENERATION

| CPU | CORE NUMBER |
|---|---|
| | PEAK UTILIZATION RATE AVERAGE |
| MEMORY | PEAK UTILIZATION AMOUNT |
| STORAGE | PEAK IOPS |
| | UTILIZATION CAPACITY |

(b)

RESPECTIVE CALCAULTED RESOURCE COSTS IN CASE OF MIGRATION TO N-TH GENERATION

| CPU COSTS | ((CORE NUMBER × FIRST-GENERATION VALID CALCULATION AMOUNT C1) / N-TH GENERATION VALID CALCULATION AMOUNT CN) × PRICE PER CORE XN |
|---|---|
| MEMORY COSTS | ((PEAK UTILIZATION AMOUNT × VALID MEMORY RATE M1) / VALID MEMORY RATE MN) × 1G PRICE YN |
| STORAGE COSTS | UTILIZATION CAPACITY × EFFECTIVE CAPACITY RATE × 1G PRICE, WHERE A STORAGE HAVING THE SMALLEST IOPS EXCEEDING THE PEAK IOPS IS APPLIED |

CALCULATED REDUCTION OF RESOURCE COSTS FOR USER P IN CASE OF MIGRATION TO N-TH GENERATION

| CURRENT RESOURCE COSTS − (CPU COST + MEMORY COST + STORAGE COST) |
|---|

(d)

(c)

GENERATIONAL MANAGEMENT DATA:N-TH GENERATION

| CPU | CLOCK NUMBER OF CORES | VALID CALCULATED AMOUNT CN | PRICE XN PER CORE |
|---|---|---|---|
| MEMORY | | VALID MEMORY RATE MN | 1G PRICE YN |
| STORAGE | UNTIL IOPS IS S | EFFECTIVE CAPACITY RATE SNS | 1G PRICE ZNS |
| | UNTIL IOPS IS A | EFFECTIVE CAPACITY RATE SNA | 1G PRICE ZNA |
| | UNTIL IOPS IS B | EFFECTIVE CAPACITY RATE SNB | 1G PRICE ZNB |

| INTERNATIONAL SEARCH REPORT | International application No. |
|---|---|
| | PCT/JP2012/070837 |

**A. CLASSIFICATION OF SUBJECT MATTER**
*G06F12/00*(2006.01)i, *G06F9/50*(2006.01)i, *G06Q50/10*(2012.01)i

According to International Patent Classification (IPC) or to both national classification and IPC

**B. FIELDS SEARCHED**

Minimum documentation searched (classification system followed by classification symbols)
G06F12/00, G06F9/50, G06Q50/10

Documentation searched other than minimum documentation to the extent that such documents are included in the fields searched
Jitsuyo Shinan Koho         1922-1996   Jitsuyo Shinan Toroku Koho   1996-2012
Kokai Jitsuyo Shinan Koho   1971-2012   Toroku Jitsuyo Shinan Koho   1994-2012

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | Hiromi YAMAHATA, Close Up, Nikkei Computer, 24 November 2010 (24.11.2010), pages 72 to 79 | 1-5 |
| Y | JP 2010-268265 A  (NEC Corp.), 25 November 2010 (25.11.2010), paragraphs [0036] to [0046] (Family: none) | 1-5 |
| Y | JP 2008-186142 A  (Hitachi, Ltd.), 14 August 2008 (14.08.2008), paragraph [0026] & US 2008/0183993 A1 | 2-5 |

☐ Further documents are listed in the continuation of Box C.   ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 04 September, 2012 (04.09.12) | 11 September, 2012 (11.09.12) |

| Name and mailing address of the ISA/<br>Japanese Patent Office | Authorized officer |
|---|---|
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2007094604 A

• JP 2000156692 A